Europäisches Patentamt

European Patent Office

Office européen des brevets

(19)

(11) Publication number: **0 079 657**

**A1**

(12) # EUROPEAN PATENT APPLICATION

(21) Application number: **82201431.2**

(22) Date of filing: **12.11.82**

(51) Int. Cl.³: **C 08 L 55/02**
**C 08 L 51/04**

(30) Priority: **13.11.81 NL 8105135**

(43) Date of publication of application:
**25.05.83 Bulletin 83/21**

(84) Designated Contracting States:
**AT BE CH DE FR GB IT LI NL SE**

(71) Applicant: **STAMICARBON B.V.**
**Postbus 10**
**NL-6160 MC Geleen(NL)**

(72) Inventor: **Hoen, Johannes Gerardus**
**Prevotlaan 9**
**NL-6132 BM Sittard(NL)**

(74) Representative: **Hatzmann, Marinus Jan et al,**
**OCTROOIBUREAU DSM P.O.Box 9**
**NL-6160 MA Geleen(NL)**

(54) Polymer composition.

(57) The invention relates to a polymer composition based on a graft copolymer of styrene and acrylonitrile on a rubber and a copolymer of α-methylstyrene and acrylonitrile .

According to the invention, this polymer composition is characterized in that it consists of:

A. 50 to 75 wt-% of a graft copolymer obtained by polymerizing 62.5-75 parts by weight of a monomer mixture consisting of:
20-40 wt-% of acrylonitrile
40-80 wt-% of styrene and
0.30 wt-% of one or more other monomers in the presence of 25-37.5 parts by weight of rubber (with respect to 100 parts by weight of the graft copolymer), and

B. 25 to 50 wt-% of a copolymer of α-methylstyrene and acrylonitrile obtained by polymerizing a mixture of 60-80 parts by weight of α-methylstyrene and 20-40 parts by weight of acrylonitrile, and

C. 0 to 10 wt-% of customary additives, the polymer composition containing at least 15 wt-% rubber.

EP 0 079 657 A1

STAMICARBON BV

Inventor: Johannes G. HOEN, Sittard

1

## POLYMER COMPOSITION

The invention relates to a thermoplastic polymer composition based on a graft copolymer of styrene and acrylonitrile on a rubber and a copolymer of α-methylstyrene and acrylonitrile (ABS polymers).

The invention also relates to moulded articles that consist partially or completely of the polymer composition.

The name ABS is derived from the initial letters of the monomers acrylonitrile, butadiene, and styrene, from which the graft copolymers are essentially prepared.

Thermoplastically deformable ABS polymers are heterogeneous plastics consisting of two phases. An elastic material, based essentially on polybutadiene and/or butadiene copolymers, in the presence of which styrene and acrylonitrile are polymerized, is dispersed as the internal discontinuous phase in a thermoplastic styrene-acrylonitrile copolymer as the matrix (SAN matrix). In principle, saturated elastomeric components can also serve as elastic material.

The physical properties of ABS polymers are only partially derived from the properties of their monomeric and/or polymeric components. One of the most important properties, the impact strength, is determined by the two-phase structure that is formed by a rubber phase embedded in a hard, brittle thermoplastic matrix.

The heat resistance of these ABS polymers is, however, inadequate for a number of applications, particularly for the motor industry and for houshold and electrical appliances.

It is known from a number of publications that the partial or total replacement of styrene by α-methylstyrene in ABS and/or SAN has a beneficial effect on the heat resistance.

United States Patent No. 3,010,936 discloses a polymer composition based on a copolymer of α-methylstyrene and acrylonitrile or a terpolymer of α-methylstyrene, styrene, and acrylonitrile mixed with a graft copolymer of styrene and acrylonitrile on a butadiene rubber.

The polymer composition of that patent suffers from the problem that to achieve a sufficient degree of heat resistance the polymer composition must contain quite a large proportion of copolymer or terpolymer, but this is not really possible since it lowers the impact strength to unacceptably low levels. Moreover, the flow properties of such polymer compositions are very poor.

Dutch Patent No. 123,514 discloses a polymer composition consisting of 68-85% of a copolymer of α-methylstyrene and acrylonitrile and 32-15% of a graft copolymer of 40-50 parts by weight of styrene and acrylonitrile on 60-50 parts by weight of polybutadiene. Such a polymer composition also suffers from the disadvantage of very poor flow behaviour, which is caused by the high rubber content of the graft copolymer and the high percentage of copolymer with a poor flow.

German Patent No. 2,140,437 describes mixtures of ABS, SAN, and a copolymer of α-methylstyrene and acrylonitrile. According to this German patent the problems that arise in relation to the flow behaviour of a mixture of ABS and a copolymer of α-methylstyrene and acrylonitrile can be overcome by adding SAN to this mixture. The improvement that can actually be achieved in the flow behaviour is, however, fairly limited, since it occurs at the expense of the heat resistance and impact strength of the polymer composition.

For many applications of ABS with improved flow properties the reduced heat resistance that results from the improved flow behaviour is adequate. These are the so-called medium-heat ABS grades. However, the impact strength of the polymer compositions of this German patent is very modest, particularly at low temperatures, so that in practice the field of application of such polymer compositions is very limited.

The aim of the present invention is therefore to provide a polymer composition with a better heat resistance than a graft copolymer of styrene and acrylonitrile on a rubber, combined with a very high impact strength, particularly at low temperatures.

The invention is characterized by a polymer composition that consists of:

A. 50-75 parts by weight of a graft copolymer obtained by polymerizing 62.5-75 parts by weight of a monomer mixture consisting of:
   20-40 wt-% of acrylonitrile,
   40-80 wt-% of styrene, and
   0-30 wt-% of one or more other monomers, in the presence of 25-37.5 parts by weight of rubber, and

B. 25-50 parts by weight of a copolymer of α-methylstyrene and acrylonitrile obtained by polymerizing a mixture of 20-40 parts by weight
of acrylonitrile and 60-80 parts by weight of α-methylstyrene, and

C. 0-10 wt-% of customary additives,

the polymer composition containing at least 15 wt-% of rubber.

Surprisingly, it has been found that such a composition gives
a comparatively good heat resistance together with a very high impact
strength, particularly at low temperatures. This is of particular importance for complicated products such as car fronts.

The impact strength of products made from polymer compositions
in accordance with the invention even approaches that of ordinary high-
impact ABS.

The latter product, however, has a heat resistance that is
inadequate for many applications, as has been mentioned above.

The composition of the proposed polymer composition is preferably chosen so that the rubber content is at least 20 wt-%. The
rubber content of the polymer composition should in general not exceed
24 wt-%.

The quantity of copolymer in the total polymer composition
should in general be less than 50 wt-%.

In accordance with a preferred embodiment, the quantity of the
copolymer is between 38 and 47 wt-%.

According to a preferred embodiment of the polymer composition, the rubber content of the graft copolymer is between 30 and
36%.

The graft copolymer is preferably made by polymerizing styrene
and acrylonitrile in the presence of rubber. Under certain circumstances
it may be advantageous to prepare the graft copolymer by polymerizing a
mixture consisting of 25-35 wt-% of acrylonitrile, 40-70 wt-% of
styrene, and 5-30 wt-% of α-methylstyrene in the presence of a rubber.

The graft copolymer may be prepared by any of the various
known polymerization techniques such as emulsion, suspension, bulk, and
solution polymerization, or by combinations of these, such as
bulk-suspension, emulsion-bulk, and emulsion-suspension polymerization.

The copolymer of α-methylstyrene and acrylonitrile is preferably prepared in emulsion, but it is also possible to use the other polymerization techniques mentioned above.

Emulsion polymerization can be performed by the usual techniques, both for the graft copolymers and for the copolymer of $\alpha$-methylstyrene and acrylonitrile.

If the polymerization is performed in aqueous emulsion it is necessary to use the customary reagents such as emulsifiers, alkali, salts, soaps, initiators such as peroxides, and chain-length regulators.

Suitable chain-length regulators are organosulphur compounds such as the widely used mercaptans or the dialkyldixanthogens, diaryl sulphides, mercaptothiazoles, tetraalkylthiuram monosulphides and disulphides, etc., singly or in combination, and hydroxyl compounds such as the terpinolenes. The dimer of $\alpha$-methylstyrene or of an $\alpha$-alkene with a relatively long chain may also be used.

The chain-length regulators that are most widely used commercially are above all the mercapto compounds, and of these the hydrocarbyl mercaptans with 8-20 carbon atoms per molecule are widely used at present. More particularly, preference is given to mercaptans with a tertiary alkyl group.

The quantity of the organosulphur compound can vary within broad limits depending on the chosen mixture, the specific compound, the polymerization temperature, the emulsifier, and other variables relating to the formulation. A good result can be achieved by using 0.01-5 parts by weight (per 100 parts by weight of the monomer) of the organosulphur compound, preference being given to 0.05-2 parts by weight of the organosulphur compound. Suitable organosulphur compounds include n-octylmercaptan, n-dodecylmercaptan, tert.dodecylmercaptan, tert.nonylmercaptan, tert.hexadecylmercaptan, tert.octadecylmercaptan, tert.eicosylmercaptan, sec.octylmercaptan, sec.tridecylmercaptan, cyclododecylmercaptan, cyclododecadienylmercaptan, arylmercaptans such as 1-naphthalenethiol etc., bis(tetramethylthiuram disulphide), 2-mercaptobenzathiazole, and the like. Mixtures of these compounds can also be used.

The emulsifier may be selected from a very wide range of compounds such as disproportionated rosin soap, fatty acid soap, mixtures of these compounds, acrylsulphonates, alkylarylsulphonates and other surface-active compounds, and mixtures of these compounds. Non-ionic emulsifiers such as polyethers and polyols may also be used. The quantities of the emulsifiers that are used depend on the type, reaction parameters, and concentrations of the polymerizable monomers in the emulsion polymerization system.

Suitable donors of free radicals for the emulsion polymerization process are organic or inorganic peroxides, hydroperoxides, azo compounds, and redox initiator systems. These compounds can be added at the start of the polymerization. Alternatively, they may be added partly at the start and partly during the course of the polymerization.

The compounds chosen as initiators are preferably the alkali metal or ammonium per-salts and/or redox systems. Particular compounds that may be mentioned are potassium persulphate, ammonium persulphate, and sodium persulphate. Examples of suitable redox systems are per-salts (for example perchlorates or persulphates), tert.butyl hydroperoxide, cumene hydroperoxide, diisopropylbenzene hydroperoxide, and methylcyclohexyl hydroperoxide, in combination with reducing agents based on acids that contain sulphur in a low valency state, such as sodium formaldehydesulphoxylate, bisulphide, and pyrosulphide, or with organic bases such as triethanolamine, or with detrose, sodium pyrophosphate, and mercaptans or their combinations, possibly together with metal salts such as ferrous sulphate. The initiators or initiator systems may be added as a single addition, in a number of stages, or even gradually.

In cases in which α-methylstyrene-acrylonitrile copolymers are prepared by suspension polymerization, the customary suspension stabilizers may be used, for example polyvinyl alcohol, partially hydrolysed polyvinyl acetate, or sparingly soluble metal phosphates.

If required, the copolymer may contain small quantities of one or more other monomers. These quantities preferably amount to less than 20 wt-% on the copolymer, more preferably less than 5 wt-%.

A description of a copolymer that may be used as component C in the polymer composition is given in the not prepublished Dutch Patent Application No. 8003798.

The rubber used for the preparation of the graft copolymers may in principle be of any type.

However, preference is given to butadiene-based rubbers such as polybutadiene and butadiene-styrene rubber. To obtain a polymer composition with a good impact resistance it is desirable to use a rubber latex with a weight-average particle size (d$_{50}$, determined with an electron microscope) between 0.05 and 0.70 µm.

In such a case the graft copolymer must be therefore be prepared at least partly in emulsion.

The process by which the rubber latex is prepared is preferably controlled in such a way that highly cross-linked products are obtained. The gel content should preferably be greater than 70 wt-% (determined in methyl ethyl ketone or toluene). At high levels of butadiene in the rubber this degree of cross-linking can be obtained by polymerizing to a high degree of conversion or by using cross-linking agents, i.e. polyfunctional monomers, such as divinylbenzene or ethylene glycol dimethacrylate.

If the graft copolymerization is performed by a route that does not involve emulsion polymerization, rubbers that are made from solutions in organic solvents may also be used. In that case, however, it is desirable to perform the graft polymerization for example in the form of a bulk-suspension polymerization.

In cases in which the rubbers are prepared by emulsion polymerization, the same emulsifiers, activators, and polymerization auxiliaries that are used in the preparation of the α-methylstyrene-acrylonitrile copolymers can be used. Before the grafting reaction occurs the rubber latex should be degassed to prevent undesirable reactions of unconverted monomer.

Preference is given to polybutadiene homopolymers or to butadiene copolymers with a butadiene content of more than 60 wt-%. If other dienes, such as isoprene or the lower alkyl esters of acrylic acid, are used as comonomers, the butadiene content of the rubber may be lowered to 30 wt-% without any adverse effect on the properties of the polymer composition. In principle, it is also possible to prepare the graft polymer of the invention from saturated rubbers, for example ethene-vinyl acetate copolymers with a vinyl acetate content of less than 50% or ethene-propene-diene terpolymers (these dienes are not conjugated; examples are 1,4-hexadiene, ethylidene norbornene, and dicyclopentadiene), or from acrylate rubber, chlorinated polyethylene, or chloroprene rubber. Mixtures of two or more rubbers can also be used.

The polymer composition generally contains the usual additives such as antioxidants, pigments, processing agents, fillers, antistatics, fire retardants, and the like.

Finally, the invention also relates to an article that is partially or completely made from the polymer composition described above.

The invention will now be illustrated by examples, without being in any way limited thereby.

## Examples

A number of compositions were prepared on the basis of a graft copolymer obtained by polymerizing 65 parts by weight of a mixture of styrene and acrylonitrile (weight ratio 70:30) in the presence of 35 parts by weight of polybutadiene and a copolymer consisting of 70 parts by weight of α-methylstyrene and 30 parts by weight of acrylonitrile.

The following table gives the compositions obtained, together with their mechanical properties.

| Example | Graft copolymer, parts by weight | Copolymer, parts by weight | Izod (+23°C) | HDT (ann.)°C |
|---------|----------------------------------|----------------------------|--------------|--------------|
|         | –                                | 100                        | 2            | 117          |
|         | 40                               | 60                         | 14           | 111          |
|         | 46                               | 54                         | 32           | 110          |
|         | 50                               | 50                         | 35           | 108          |
|         | 60                               | 40                         | 44           | 106          |
|         | 65                               | 35                         | 44           | 104          |
|         | 100                              | –                          | 45           | 94           |

CLAIMS

1. Polymer composition based on a graft copolymer of styrene and acrylonitrile on a rubber and a copolymer of α-methylstyrene and acrylonitrile, characterized in that the composition consists of:

    A. 50 to 75 wt-% of a graft copolymer obtained by polymerizing 62.5-75 parts by weight of a monomer mixture consisting of:

    20-40 wt-% of acrylonitrile

    40-80 wt-% of styrene and

    0-30 wt-% of one or more other monomers in the presence of 25-37.5 parts by weight of rubber (with respect to 100 parts by weight of the graft copolymer), and

    B. 25 to 50 wt-% of a copolymer of α-methylstyrene and acrylonitrile, obtained by polymerizing a mixture of 60-80 parts by weight of α-methylstyrene and 20-40 parts by weight of acrylonitrile, and

    C. 0 to 10 wt-% of customary additives, the polymer composition containing at least 15 wt-% rubber.

2. Polymer composition in accordance with Claim 1, characterized in that more than 16 wt-% of rubber is present.

3. Polymer composition in accordance with Claim 1 or 2, characterized in that the composition contains 38 to 47 wt-% of copolymer B.

4. Polymer composition in accordance with any of Claims 1-3, characterized in that the graft copolymer contains 30-36 wt-% of rubber.

5. Polymer composition in accordance with one or more of Claims 1-4, characterized in that the graft copolymer is obtained by polymerizing a monomer mixture consisting of 25-35 wt-% of acrylonitrile, 40-70 wt-% of styrene, and 5-30 wt-% of α-methylstyrene in the presence of rubber.

6. Polymer composition in accordance with any one of the preceding claims, characterized in that the rubber consists of one or more rubbers selected from the group comprising polybutadiene, styrenebutadiene rubber, butadiene-acrylonitrile rubber, acrylate rubber, ethene-propene(diene) rubber, chloroprene rubber, and ethene-vinyl acetate copolymers.

7. Polymer composition as described and as illustrated by the examples.

8. Article partially or completely made from a polymer composition in accordance with one or more of the preceding claims.

**European Patent Office**

# EUROPEAN SEARCH REPORT

**0079657**
Application number

EP 82 20 1431

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 08 L 55/02 |
| E | EP-A-0 043 613 (STAMICARBON) *Claims* | 1-8 | C 08 L 51/04 |
| | ----- | | |

**TECHNICAL FIELDS SEARCHED (Int. Cl. ³)**

C 08 L 55/02
C 08 L 51/04

The present search report has been drawn up for all claims

| Place of search | Date of completion of the search | Examiner |
|---|---|---|
| THE HAGUE | 15-02-1983 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82